(19) Europäisches Patentamt

European Patent Office

Office européen des brevets

(11) EP 1 630 968 A1

(12) EUROPEAN PATENT APPLICATION

(43) Date of publication:
01.03.2006 Bulletin 2006/09

(51) Int Cl.:
*H04B 3/46* (2006.01) *H04L 27/26* (2006.01)

(21) Application number: 04292070.2

(22) Date of filing: 23.08.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(71) Applicant: ALCATEL
75008 Paris (FR)

(72) Inventors:
• Bostoen, Tom
2018 Antwerpen (BE)

• Luyten, Peter
2000 Antwerpen (BE)
• Van Acker, Katleen Peggie Florimond
2600 Berchem (BE)

(74) Representative: Narmon, Gisèle Marie Thérèse et al
Alcatel Bell N.V.
Intellectual Property Department
Francis Wellesplein 1
2018 Antwerpen (BE)

(54) **Crosstalk manager for access network nodes**

(57) A crosstalk agent for integration in or connection to an access node (DSLAM) automatically gathers quantitative information indicative for the crosstalk coupling between lines (LINE1, LINE2, LINE3, LINE4) connected to the access node (DSLAM). The information may be extracted from an access node MIB each time the on/off state of a line changes, and optionally is used to group the lines in virtual binders. The crosstalk agent may optionally interface with service deployment or service upgrade experts, or with a dynamic spectrum management module in the access node (DSLAM).

Fig. 1

EP 1 630 968 A1

**Description**

The present invention relates to estimation of crosstalk between communication lines connected to an access node, such as for instance the Digital Subscriber Lines (DSL lines) connected to a Digital Subscriber Line Access Multiplexer (DSLAM).

Crosstalk remains one of the major limiting factors for DSL transmission. Crosstalk limits the obtainable DSL bitrate (for a given loop length) or the DSL reach at a guaranteed minimum bitrate. Further, crosstalk can cause errors in the transmission or even worse, it can cause service interruption and the need for time consuming re-initializations and re-synchronizations. As a consequence crosstalk plays a major role in DSL service deployment. For example, a line might be out of service due to excessive crosstalk, upgrading of users to higher bitrate services might be impossible for certain users due to crosstalk, when a particular line is in service crosstalk may have to be minimized through a dynamic spectrum management (DSM) algorithm, etc. For all DSL deployment phases (such as prequalification or in-service optimisation) solutions are investigated that try to estimate the impact of crosstalk, or even minimize it (such as DSM). An important question that arises is which lines are crosstalk-affecting one another. Typically a cable leaving the central office contains thousands of lines. Crosstalk coupling is present between all line couples, but the crosstalk coupling is not equally strong for each line couple. Especially when the lines inside a cable are grouped in binders, the crosstalk coupling between lines in the same binder is on average 10 dB higher than the crosstalk between lines in separate binders. To limit the complexity of for example DSM algorithms it is important to know which lines are in the same binder or, more precisely, which lines affect one another most by crosstalk coupling. Also for other DSL deployment scenario's, for example service upgrading or fault diagnosis, the crosstalk coupling knowledge is very valuable.

Today some DSL operators have loop databases that contain design records from which they can deduce which lines are in the same cable or cable binder. However these databases are not always electronic and if so, they are not always updated, so the reliability is estimated between 60 and 80 %. Furthermore these databases only contain information on the mechanical design of the loop plant, they do not contain information on the actual crosstalk coupling between the lines. From field tests, it is known that there is a lot of variation in crosstalk coupling between line couples - up to 20 dB - which cannot be accurately determined solely on the basis of the mechanical design of the loop plant. Another complication is that a loop consists of a large number of sections which are spliced together at regular intervals or connected via jumper cables at network flexibility points such as junction wire interfaces. At each connection between two sections, the crosstalk coupling strength between two lines can change. So in practice it will be very difficult to use loop databases in order to determine which lines affect one another by crosstalk. A further, rather practical problem of the prior art solution based on loop databases, is that these loop databases are not designed for retrieving crosstalk coupling strengths thereof. Thus, it would require an enormous effort to extract the required data from the loop records.

An object of the present invention is to ease crosstalk estimation between lines connected to an access node, and to improve the accuracy and reliability thereof.

According to the present invention, this object is realized by the crosstalk agent defined in claim 1.

Indeed, by providing in the access node or connected to the access node, an agent that automatically gathers quantitative information indicative for the crosstalk between line couples - for example but not limited to the measured SNR increase on a second line when the on/off status of the first line changes - accurate and reliable information directly quantifying the crosstalk between line pairs becomes permanently available to the access service provider for use when putting into service new DSL lines, deploying service or bit rate upgrades, analyzing service failures or interruptions, etc.

Optionally, the crosstalk agent according to the present invention extracts the crosstalk information from an access node MIB as defined by claim 2.

This way, the crosstalk agent monitors for instance the DSL lines via the MIB, making use of measurement data that are already available.

The gathered crosstalk information optionally may comprise the noise margin, the signal to noise ratio or SNR, the attainable data rate, the line lengths, the line attenuation, or the transfer function as indicated by claims 3 to 7, and the crosstalk agent optionally may comprise a unit that derives the crosstalk coupling strength, the FEXT crosstalk transfer function versus frequency, or the NEXT crosstalk transfer function versus frequency as indicated by claims 8 to 10.

Indeed, the magnitude of a change in noise margin, or a change in signal to noise ratio can serve as a measure for the crosstalk coupling strength between lines. Additional information however could even make it possible to deduce the crosstalk transfer function versus frequency. The far end crosstalk transfer function or FEXT crosstalk transfer function between a first line and a second line for instance is modelled as follows:

$$H_{12}(f) = K_{F,12} \cdot f^2 \cdot \min(l1, l2) \cdot e^{-2\alpha(f)l2}$$

Herein, f represents the frequency, $K_{F,12}$ represents the FEXT coupling strength between line 1 and line 2, l1 represents the length of line 1 and l2 the length of line 2, and $e^{-2\alpha(f)l2}$ is the direct transfer function of line 2. From the attenuation parameters of line 1 and 2 available at the MIB, their lengths and direct transfer functions could be derived (under the assumption that the lines are of one and the same cable type, e.g. 0.4 mm). The FEXT coupling strength $K_{F,12}$ can be deduced from the noise margin or SNR measurement (versus time, by correlating with on/off transitions on other lines), thus allowing to determine the FEXT crosstalk transfer function versus frequency. Alternatively, the lengths and direct transfer functions can be measured in case the attenuation information is not available via a MIB. In ADSL2 compliant DSLAMs for instance, the direct transfer function is available via the MIB, while the lengths are not. The lengths could be derived from the direct transfer function measurements or other ways for measuring the loop lengths could be implemented. Similarly to the FEXT crosstalk transfer function, the NEXT crosstalk transfer function or near end crosstalk transfer function versus frequency can be determined.

Other quantitative info that is possibly useful for the crosstalk agent according to the invention is the attainable data rate, quiet line noise, bit allocation, info about the change of power/PSD status of the first line such as on/off state transitions or changes in the line power management state (e.g. the switching between L0, L1, L2, L3 states in the ADSL Specifications).

Yet another feature of the present invention, is that the information might be partially or entirely measured when the on/off status of the first line changes as indicated by claim 11.

Indeed, changes in for instance the noise margin or the SNR measured on a second line at the point in time where the first line switches on or off, quantify the crosstalk relationship between those two lines. Note however that other state transitions such as the transitions between the line power management states L0, L1, L2 and L3 as defined in the ADSL Specifications could also be correlated with for instance noise or SNR measurements on other lines to quantify the crosstalk coupling between the lines under test and the line where the state transition occurs.

A further optional feature of the crosstalk agent according to the current invention is that it may be able to classify the lines in virtual binders as indicated by claim 12.

Thus, knowledge of which lines affect one another by crosstalk may be used to group the lines extending from one access node into virtual binders. These virtual binders may or may not correspond to the actual binders, but for sure are of more interest to the operator in deploying or upgrading the service.

As defined by claim 13, a comparison of the crosstalk coupling strength with a threshold may for instance be decisive when grouping together lines in virtual binders. Obviously, other criteria may be used to establish the virtual binders, in particular when more detailed information is available like the FEXT or NEXT crosstalk transfer functions versus frequency.

Again optionally, the crosstalk agent according to the invention may be equipped with various interfaces as indicated by claims 14 to 16.

Knowledge of which lines belong to the same virtual binder, or the actual crosstalk coupling strengths or crosstalk transfer functions versus frequency, are for instance of great value to service deployment expert modules, service upgrade expert modules and/or dynamic spectrum management modules that could be integrated in the access node, or in the management platform for the access network.

The invention is particularly useful in DSL access nodes such as ADSL DSLAMs or VDSL DSLAMs as is indicated by claim 17.

The above mentioned and other objects and features of the invention will become more apparent and the invention itself will be best understood by referring to the following description of embodiments of the invention taken in conjunction with the accompanying drawings wherein:

    Fig. 1 shows an access network wherein an embodiment of the crosstalk agent according to the present invention is integrated in the access node DSLAM; and
    Fig. 2 represents a diagram showing the change in noise margin measured on LINE 2, LINE3 and LINE4 when the on/off status of LINE1 in Fig. 1 changes.

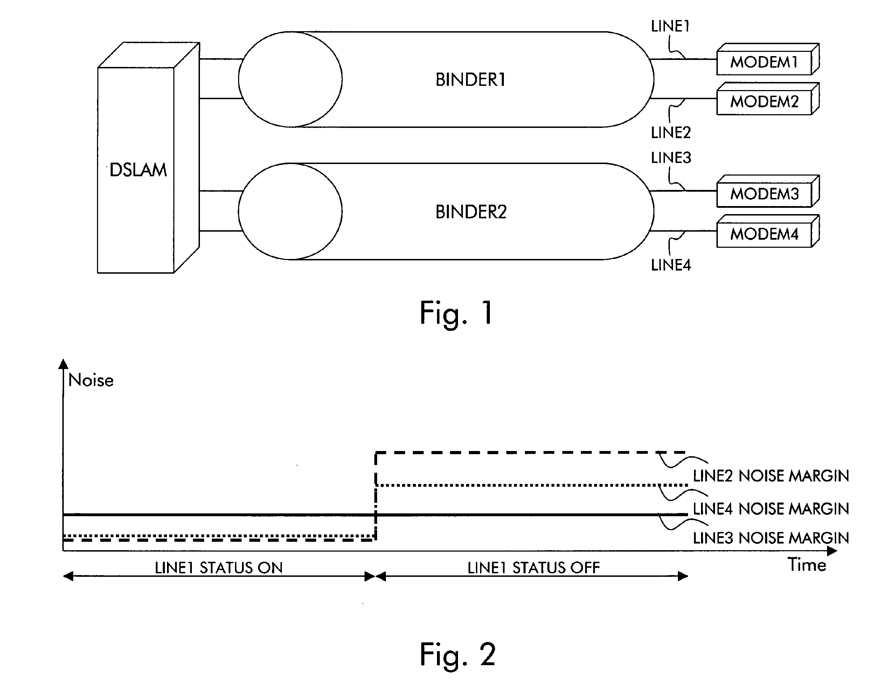

Fig. 1 shows an ADSL access network wherein a few hundred or few thousand of ADSL modems are connected to the access multiplexer DSLAM or ADSL central office. To illustrate the working of an embodiment of the current invention, four of those modems, MODEM1, MODEM2, MODEM3 and MODEM4, respectively coupled to the DSLAM via twisted pair copper lines LINE1, LINE2, LINE3 and LINE4 are drawn in Fig. 1. The first two lines, LINE1 and LINE2, form part of the same physical binder: BINDER1. Similarly, the two other lines, LINE3 and LINE4, form part of a second physical binder: BINDER2.

The access multiplexer DSLAM in Fig. 1 incorporates a crosstalk agent according to the current invention. Each time the on/off status of one of the lines connected to the DSLAM changes, this crosstalk agent collects the noise margin values measured on all other lines from the DSLAM MIB (Management Information dataBase). The difference between the noise margin measured on a particular line after the changing of the on/off status and the noise margin measured on that same particular line before the changing of the on/off status, is compared to a predetermined threshold value. When this difference exceeds the predetermined threshold value, the particular line is grouped together with the line whose on/off status changed into a single virtual binder. If the difference in noise margin before and after the changing of the on/off status stays below the predetermined threshold, the particular line is not classified together with the line whose on/off status changed in a single virtual binder. The contents of the so constituted virtual binders, i.e. the knowledge of which lines belong to which virtual binder, is memorized by the crosstalk agent and made available on request to other functions in the DSLAM, typically service deployment and/or upgrade assistants.

Fig. 2 for instance shows the situation where LINE1 is switched off. The switching off of LINE1 has no effect on the noise margin measured on LINE3 (flat LINE3 NOISE MARGIN in Fig. 2), but the noise margin on LINE2 and LINE4 show a significant increase (LINE2 NOISE MARGIN and LINE4 NOISE MARGIN in Fig. 2) indicating that there is a high probability that there is a causal relationship between the off-switching of LINE1 and the noise margin increase on LINE2 and LINE4. As a consequence, the crosstalk agent in DSLAM shall decide to group LINE1, LINE2 and LINE4 in a single virtual binder. LINE3 will not form part of that virtual binder. These virtual binders obviously do not correspond to the actual physical binders, BINDER1 and BINDER2 in Fig. 1, but are of more interest. From the noise margin increase, the crosstalk agent can calculate the crosstalk coupling strengths between the lines. The more lines are switching on or off, the more measurements are collected by the crosstalk agent, and the more accurate the derivation of the crosstalk coupling strengths will be. The end result will be memorized knowledge of which lines affect one another by crosstalk and the quantitative level of crosstalk coupling between each pair of lines. The knowledge of which pairs form part of the same virtual binder and the associated crosstalk coupling strengths are of great value for service deployment and upgrade expert modules, and for dynamic spectrum management (DSM) algorithms which may be integrated in the DSLAM or in the management platform of the ADSL network operator that manages several DSLAMs.

Thanks to the crosstalk agent, crosstalk coupling info will be more reliable and accurate than the crosstalk info that could come from operator's loop design records. The crosstalk agent further allows to track changes due to for example field repairs, and is easier accessible than loop design records when provided with the necessary interfaces, such as for instance an interface to a service upgrade expert module, an interface for service deployment experts, an interface for DSM algorithms, etc.

Instead of the actual noise margin, variant embodiments of the crosstalk agent according to the current invention may collect different and/or additional information from the DSLAM MIB, or may measure certain parameters themselves, like loop lengths, attenuations, direct transfer functions, ... With such additional information for instance it could be possible to deduce the far end crosstalk (FEXT) transfer function versus frequency. For LINE1 and LINE2, this far end crosstalk transfer function can be modeled as follows:

$$H_{12}(f) = K_{F,12} \cdot f^2 \cdot \min(l1, l2) \cdot e^{-2\alpha(f)l2}$$

Herein, f represents the frequency, $K_{F,12}$ represents the FEXT coupling strength between LINE1 and LINE2, l1 represents the length of LINE1 and l2 the length of LINE2, and $e^{-2\alpha(f)l2}$ is the direct transfer function of LINE2. From the attenuation parameters of LINE1 and LINE2 available at the DSLAM MIB, their lengths and direct transfer functions could be derived (under the assumption that the lines are of one and the same cable type, e.g. 0.4 mm). The FEXT coupling strength $K_{F,12}$ can be deduced from the noise margin or SNR measurement ((versus time, by correlating with on/off transitions on other lines), also available at the DSLAM MIB, thus allowing to determine the FEXT crosstalk transfer function versus frequency. Alternatively, the lengths and direct transfer functions can be measured in case the attenuation information is not available via a MIB. The NEXT crosstalk transfer function or near end crosstalk transfer function versus frequency can be modelled similarly to the FEXT crosstalk transfer function.

It is further noticed that the crosstalk agent according to the current invention may form part of the management platform serving several DSLAMs from a single DSL network operator, or even several DSLAMs of different DSL network operators if they are prepared to collaborate.

Although reference was made above to ADSL (Asymmetric Digital Subscriber Line technology used for transmission over twisted pair telephone lines), any skilled person will appreciate that the present invention can be applied with same advantages in a cable based, a fiber based or a radio based access system, where variant access multiplexers aggregate the traffic from and to a substantial amount of access subscribers via optical cable or wireless links that may affect one another by crosstalk. Thus the access multiplexer could alternatively be a PON OLT (Passive Optical Network Line Termination), a mini-DSLAM or fiber-fed remote cabinet serving a smaller amount of ADSL or VDSL subscribers, a DLC (Digital Loop Carrier), etc. In particular wireless systems suffer from crosstalk because it is a shared medium which needs a MAC (Medium Access Control) protocol to allow multiple connections because there is no space division duplexing (SDD). The invention could for instance be useful in wireless cellular networks to provide input on how to design the cells and how to configure the MAC layer.

Furthermore, it is remarked that an embodiment of the present invention is described above rather in functional terms. From the functional description, it will be obvious for a person skilled in the art of designing hardware and/or software embodiments of the invention.

While the principles of the invention have been described above in connection with specific apparatus, it is to be clearly understood that this description is made only by way of example and not as a limitation on the scope of the claims.

**Claims**

1. Crosstalk agent for integration in or connection to an access node (DSLAM), **CHARACTERISED IN THAT** said crosstalk agent comprises information gathering means to automatically gather quantitative information indicative for the crosstalk coupling between a first line (LINE1) connected to said access node and further lines (LINE2, LINE3, LINE4) connected to said access node (DSLAM).

2. Crosstalk agent according to claim 1, **CHARACTERIZED IN THAT** said information gathering means is adapted to gather said quantitative information from measurement data available at the management information database (MIB) for said access node (DSLAM).

3. Crosstalk agent according to claim 1, **CHARACTERISED IN THAT** said quantitative information comprises the noise margin on said further lines (LINE2, LINE, LINE4).

4. Crosstalk agent according to claim 1, **CHARACTERISED IN THAT** said quantitative information comprises the signal to noise ratio (SNR) on said further lines (LINE2, LINE3, LINE4).

5. Crosstalk agent according to claim 1, **CHARACTERISED IN THAT** said quantitative information comprises the lengths of said further lines (LINE2, LINE3, LINE4).

6. Crosstalk agent according to claim 1, **CHARACTERISED IN THAT** said quantitative information comprises the attenuation of said further lines (LINE2, LINE3, LINE4).

7. Crosstalk agent according to claim 1, **CHARACTERISED IN THAT** said quantitative information comprises the direct transfer function of said further lines (LINE2, LINE3, LINE4).

8. Crosstalk agent according to claim 1, **CHARACTERISED IN THAT** said crosstalk agent further comprises crosstalk derivation means adapted to derive a crosstalk coupling strength between said first line (LINE1) and said further lines (LINE2, LINE3, LINE4) from said quantitative information.

9. Crosstalk agent according to claim 1, **CHARACTERISED IN THAT** said crosstalk agent further comprises crosstalk derivation means adapted to derive a frequency dependent far end crosstalk transfer function between said first line (LINE1) and said further lines (LINE2, LINE3, LINE4) from said quantitative information.

10. Crosstalk agent according to claim 1, **CHARACTERISED IN THAT** said crosstalk agent further comprises crosstalk derivation means adapted to derive a frequency dependent near end crosstalk transfer function between said first line (LINE1) and said further lines (LINE2, LINE3, LINE4) from said quantitative information.

11. Crosstalk agent according to claim 1, **CHARACTERISED IN THAT** at least part of said quantitative information is measured when the on/off status of said first line changes.

12. Crosstalk agent according to claim 1, **CHARACTERISED IN THAT** said crosstalk agent further comprises virtual binder means adapted to group said first line (LINE1) with crosstalk affected lines (LINE2, LINE4) out of said further lines (LINE2, LINE, LINE4) into a virtual binder for memorization.

13. Crosstalk agent according to claims 8 and 12, **CHARACTERISED IN THAT** said crosstalk affected lines (LINE2, LINE4) have a crosstalk coupling strength with said first line (LINE1) that exceeds a certain threshold.

14. Crosstalk agent according to claim 1, **CHARACTERIZED IN THAT** said crosstalk agent comprises an interface for interfacing with a service deployment expert module in said access node (DSLAM).

15. Crosstalk agent according to claim 1, **CHARACTERIZED IN THAT** said crosstalk agent comprises an interface for interfacing with a service upgrade expert module in said access node (DSLAM).

16. Crosstalk agent according to claim 1, **CHARACTERIZED IN THAT** said crosstalk agent comprises an interface for interfacing with a dynamic spectrum management (DSM) module in said access node (DSLAM).

17. Crosstalk agent according to claim 1, **CHARACTERISED IN THAT** said access node is a Digital Subscriber Line Access Multiplexer (DSLAM).

EP 1 630 968 A1

Fig. 1

Fig. 2

**European Patent Office**

**EUROPEAN SEARCH REPORT**

Application Number

EP 04 29 2070

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2004/095921 A1 (KERPEZ KENNETH) 20 May 2004 (2004-05-20) * paragraphs [0018], [0020], [0026], [0037], [0040] - [0048] * ----- | 1-17 | H04B3/46 H04L27/26 |
| X | US 6 636 603 B1 (MILBRANDT CELITE) 21 October 2003 (2003-10-21) * column 2, line 18 - line 35 * * column 2, line 47 - line 67 * ----- | 1-17 | |
| X | US 6 229 855 B1 (SHALASH AHMED F  ET AL) 8 May 2001 (2001-05-08) * column 2, line 20 - line 31 * * column 2, line 46 - line 52 * ----- | 1-17 | |
| A | US 6 128 348 A (CHEN CHUNTA  ET AL) 3 October 2000 (2000-10-03) * abstract * ----- | 1-17 | |
| | | | TECHNICAL FIELDS SEARCHED  (Int.Cl.7) |
| | | | H04L H04B |

The present search report has been drawn up for all claims

| Place of search | Date of completion of the search | Examiner |
|---|---|---|
| The Hague | 26 October 2004 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 04 29 2070

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2004

| Patent document cited in search report | | Publication date | Patent family member(s) | | Publication date |
|---|---|---|---|---|---|
| US 2004095921 | A1 | 20-05-2004 | WO | 2004047325 A1 | 03-06-2004 |
| US 6636603 | B1 | 21-10-2003 | NONE | | |
| US 6229855 | B1 | 08-05-2001 | NONE | | |
| US 6128348 | A | 03-10-2000 | NONE | | |

For more details about this annex : see Official Journal of the European Patent Office, No. 12/82